Europäisches Patentamt

European Patent Office

Office européen des brevets

(19)

(11) EP 0 235 456 B1

(12) EUROPEAN PATENT SPECIFICATION

(45) Date of publication and mention
of the grant of the patent:
**24.03.1999 Bulletin 1999/12**

(21) Application number: **86309702.8**

(22) Date of filing: **12.12.1986**

(51) Int Cl.⁶: **G06T 9/00**, G06T 11/00

(54) **Image processing apparatus and method with blocks of compressed data**

Bildverarbeitungsgerät und -verfahren mit Blöcken von komprimierten Daten

Appareil et méthode de traitement d'image utilisant des blocs de données comprimées

(84) Designated Contracting States:
**DE FR GB NL**

(30) Priority: **13.12.1985 JP 281631/85**
**13.12.1985 JP 281632/85**
**13.12.1985 JP 281633/85**
**13.12.1985 JP 281634/85**
**14.12.1985 JP 281537/85**

(43) Date of publication of application:
**09.09.1987 Bulletin 1987/37**

(60) Divisional application: **93203482.0 / 0 597 556**
**93203481.2 / 0 597 555**

(73) Proprietor: **CANON KABUSHIKI KAISHA
Tokyo (JP)**

(72) Inventors:
• **Sato, Mamoru
Meguro-ku Tokyo (JP)**
• **Osawa, Hidefumi
Urawa-shi Saitama-ken (JP)**
• **Kawamura, Naoto
Yokohama-shi Kanagawa-ken (JP)**

(74) Representative:
**Beresford, Keith Denis Lewis et al
BERESFORD & Co.
2-5 Warwick Court
High Holborn
London WC1R 5DJ (GB)**

(56) References cited:
EP-A- 179 292          GB-A- 1 551 229
GB-A- 2 024 561          GB-A- 2 073 995
US-A- 3 945 019          US-A- 4 281 312
US-A- 4 636 783

• **IEEE TRANSACTIONS ON SYSTEMS, MAN, AND
CYBERNETICS, July 1973, pages 410-415, New
York, US; K.S. HAN et al.: "The application of an
image-compression/feature-transgeneration
technique to the computer-aided diagnosis of
brain tumors"**

Remarks:
Divisional application 93203482.0 filed on 12/12/86.

EP 0 235 456 B1

**EP 0 235 456 B1**

**Description**

The present invention relates to an image processing apparatus and a method of image processing, in which compressed image data is stored in a memory device which represents image blocks, each block being obtained by dividing an image frame into a plurality of blocks.

Image processing devices are known which are very expensive, being large in size and requiring a significant amount of time to perform a processing operation. Consequently, such machines have only been used as part of sophisticated printing systems.

Examples of such systems are the Response 300 series manufactured by Scitex and the Studio-800 series manufactured by Crossfield.

In general, an image editing apparatus requires two editing functions. Firstly, high speed processing, performed by hardware circuits and, secondly, software processing performed by a central processing unit.

The first of said functions is achieved by hardware, commonly referred to as a pipeline processor, which is applied to certain items of image processing which require high speed. the second function, essentially software, is applied to certain items conducted in an interactive manner with an operator, requiring much greater processing times.

Specifically, the pipeline processor is principally applied to successive image processing, such as affine conversion (enlargement, reduction, displacement or rotation) for determining the image layout, spatial filtration (enhancement or smoothing) and colour conversions, with look-up tables.

CPU processing is generally applied to complex processes or those which cannot be easily implemented in hardware. Specifically, these include the extraction of an image in an arbitrary shape, the copying of an extracted image to another location and the partial correction of images. These processes generally require creativity on the part of the operator and longer periods of processing time can be tolerated. The processing functions of this type tend to be highly advanced.

The system architecture of the image editing apparatus should be designed in order to achieve maximum performance of the two above mentioned editing functions. In order to achieve these functions with sufficiently high speed, it is necessary to consider the structure of the system, the data format to be handled, the flow of signals and the construction of functions etc.

Various investigations have led to the following features of a system architecture for a colour image processing apparatus:

1. For achieving image processing, the image data should be maintained as compressed data;

2. Vector quantization is the preferred form of compression in which an m x m block is represented by a code; and

3. Hardware processes are most reasonably conducted as a plurality of successive processes in a pipelined manner, during the transfer of signals to and from disks.

With respect to item 1 above, an image editing process with a high resolving power and a high tonal rendition requires a very large memory capacity. As an example, if an A4 sized colour image is read with a resolving power of 16 pel/mm, a data capacity in the region of 48 megabytes is required for the three colours of red, green and blue. For achieving the above mentioned interactive image precessing in a satisfactory manner, it is important to compress the colour image data into a form suitable for processing. In this respect, vector quantization, as mentioned above in item 2, is considered to provide optimum operation.

In a high speed hardware processing environment, as identified by item 3 above, a longer processing time will be required if the processing is conducted in two steps, that is, a transfer step of the data from a file, such as from a rigid disk to a memory device and a process step of a hardware process being performed on the memory. Alternatively, high speed processing is achievable if the processing is conducted simultaneously with the transfer of data being performed.

In EP-A-0179292 (not published at the present priority date) and in US 4,636,783, systems are disclosed which show the rotation of image data, without compression. This rotation is accomplished by the sequence of shifting whole blocks and then rotating pixels within each block. US 4, 281,312 shows a compression of data by a process of pattern recognition by block by block basis.

The present invention provides an image processing apparatus for performing an affine transformation of image data representing an array of pixels defining a colour image, the image data comprising a plurality of colour signal components (Y,I,Q) each comprising respective colour signal data in respect of each of the pixels and the colour signal components collectively defining the intensity and colour of the array of pixels, wherein the apparatus comprises memory means for storing the colour image data as a plurality of arrays of data blocks such that a respective array of data blocks is provided for each of said colour signal components and each data block represents colour signal data for a corresponding block of pixels, wherein the location of each data block in its respective array of data blocks depends upon the position of the corresponding block of pixels in the array of pixels, and wherein each data block is stored in said memory means in a compressed form in accordance with a predetermined image encoding format which, with regard to at least one array of data blocks, compresses the colour signal data for each data block while substantially preserving the resolution of the colour signal data which it contains; and processing means for performing the affine transformation of the image data by (i) a first process in which the data blocks stored in said memory means are shifted in the respective arrays of data blocks so as to change the positions of the corresponding block of pixels in the colour image in accordance with said affine transformation, and (ii) a second process in which the colour signal data within each data block of said at least one array of data blocks is modified while the data blocks remain in said compressed form so as to change the positions of pixels within the corresponding blocks of pixels in accordance with said affine transformation. The invention thereby combines block based compression with affine transformation processing, to achieve high performance with reduced memory requirement. The processing means may operate on blocks of data as they are transferred from one part of memory to another, for example from a main memory to a display memory.

In an embodiment wherein each data block of said at least one array of data blocks comprises an average value of the corresponding colour signal data for the corresponding block of pixels and, for each pixel in the corresponding block of pixels, a quantised code indicative of the colour signal data of that pixel relative to said average value, the second process may modify the quantised codes within the compressed data block. In such an embodiment, each data block of said at least one array of data blocks may further comprise a standard deviation of the corresponding colour signal data for the corresponding block of pixels and the above mentioned quantised codes can be normalised in units of the standard deviation.

In an alternative embodiment, each of the data blocks of said at least one array of data blocks comprises an average value of the corresponding signal data for the corresponding block of pixels and an angle of rotation of a pattern representing the corresponding block of pixels. In such an embodiment, the second process may operate by modifying the angle of rotation within the compressed data block.

The image data may comprise separate luminance and chrominance signals, as desired, and the affine transformation may comprise for example rotation of the image.

The invention further provides methods of image processing corresponding to the above.

The invention will now be described by way of example only, with reference to the accompanying drawings, in which:

Fig. 1 is a block diagram of a colour image processing apparatus constituting an embodiment of the present invention;

Figs. 2A and 2B are views of encoded data formats;

Figs. 3A to 3G are schematic views showing the concepts of block rotation and in-block rotation;

Fig. 4 is a view showing an in-block rotation;

Figs. 5A and 5D are views showing processes to which codes are subjected by rotation;

Fig. 6 is a block diagram of a rotating circuit;

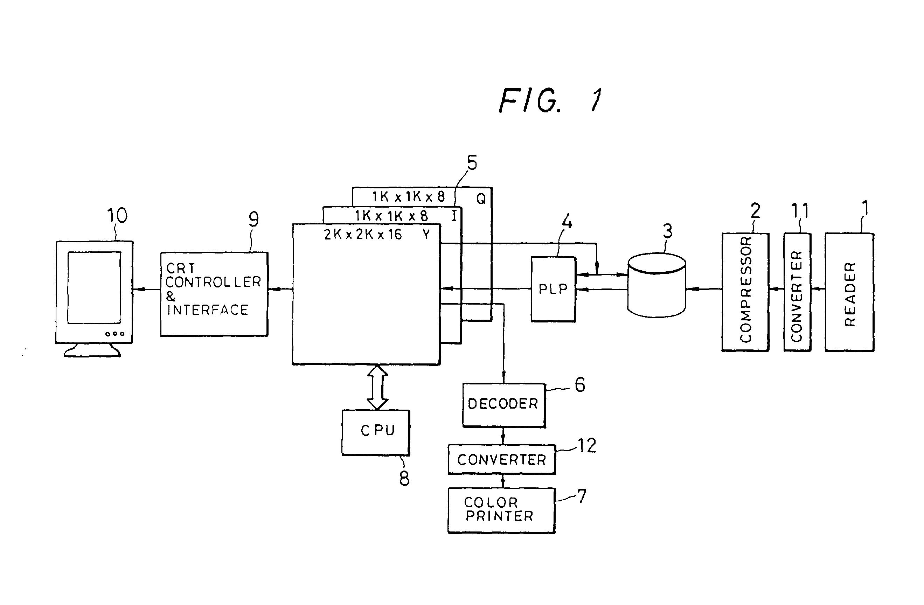

Fig. 1 illustrates an image processing apparatus wherein shown are a reader 1 for reading an original image with a high resolving power and with multiple density levels (a digital value of 2 bits or more); a compressor 2 for encoding image data; a memory 3 of a large capacity for temporarily storing the encoded image data or the data after a processing a before another processing; a pipeline processor 4 for editing input image data in raster form obtained from the memory 3; a random access image memory 5 for storing the results of processing; a decoder 6 for decoding the encoded data into another data of a high resolving power and of multiple density levels; a CPU 8 for controlling the entire apparatus and applying fine processing to the image data; a CRT interface 9 for supplying a cathode ray tube 10 with encoded data; a colour cathode ray tube 10; a converter 11 for converting the signal from reader 1 into a standard colour signal; and a converter 12 for converting the standard colour signal into a signal for a printer.

As the pipeline processor 4 is designed to process the image data entered in the sequence of rasters, the memory 3 need not be an expensive random access memory but can be, for example, a rigid disk memory.

In operation, image data, obtained by the reader 1 and composed for example of 8 bits per pixel for each of red, green and blue signals, are converted by a converter 11 to obtain a luminance signal Y and colour difference signals I, Q employed in the NTSC system. Such conversion can be achieved by a following matrix calculation of the red, green and blue data in the following manner:

$$\begin{pmatrix} Y \\ I \\ Q \end{pmatrix} = \begin{pmatrix} 0.3 & 0.59 & 0.11 \\ 0.6 & -0.28 & -0.32 \\ 0.21 & -0.52 & 0.31 \end{pmatrix} \begin{pmatrix} R \\ G \\ B \end{pmatrix}$$

wherein the coefficients may be suitably adjusted according to the colour separating characteristics and gamma characteristics of the reader. Said signals Y, I, Q are compressed by a compressor 2 and stored in a disk memory 3 constituting an image data file. The image data in said disk are then read to an IC memory, constituting an image memory 5, for processing or editing. For achieving a high-speed process, basic processes are executed, by a pipeline processor 4, formed as a hardware, through a raster operation, in the transfer form the disk to the image memory 5.

The image data on the image memory 5 are processed and edited by a CPU 8. The procedure of image editing is displayed on a colour CRT 10 by a CRT controller 9 for monitoring. The edited result is converted into image data by a decoder 6, and then converted by a converter 12 into colour signals of yellow, magenta, cyan and black for supply to a colour printer 7.

In the following there will be explained the method of compression of image data. In a three colour signal system composed of the luminance signal Y and colour difference signals I and Q, it is already known that the visual image quality can be maintain by preserving the spatial frequency of the luminance signal Y, even if the spatial frequency of the colour difference signals I, Q are limited to a certain extent in the high-frequency region.

It is therefore considered, in data compression, to reduce the amount of data of a colour image by representing the colour information in the colour difference signals I, Q, for example by the average value in an m x m block wherein m is an integer. The size of said block is selected for examples as 2 x 2, 4 x 4, 6 x 6, etc. according to the variable memory capacity. As an example, in case of a block size of 4 x 4, the aforementioned memory capacity of 48 Mbyte required for an A4-sized image can be reduced to the Y-signal of 16 Mbyte and I, Q signals of 2 Mbyte, or a total of 18 Mbyte, with a compression rate of ca. 2.7.

Different from the compression of the signals I, Q, the luminance signal Y requires a compression which satisfactorily preserves the data on resolving power.

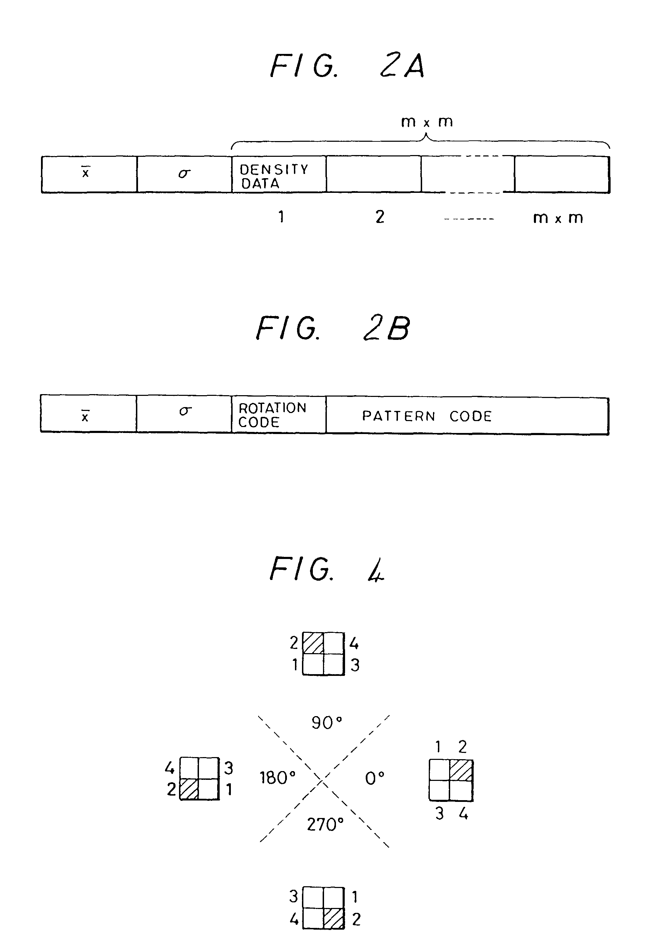

A first conceivable method is block encoding. In this method the average $\bar{x}$ and standard deviation o are calculated on the pixel data x in the m x m block. The density of each pixel is represented by several bits, for example by requantising $(x - \bar{x}) / \sigma$. Fig. 2A shows the format of thus compressed data, in which the average value and the standard deviation are followed by the density information in order to positions of pixels in the block. Consequently a rotation of the pixels in the block can be achieved by changing the sequence of the density information.

A second conceivable method is vector quantization of m x m pixels. In this method, the pixel data in the m x m block are represented by the average value $\bar{x}$, standard deviation $\sigma$, a code indicating image rotation and a code representing image pattern, in order to achieve data compression. Fig. 2B shows the corresponding data format, wherein the rotation code indicates the angle of rotation of the image pattern in the m x m block, and, in the present embodiment, indicates an angle of 0°, 90°, 180° or 270° in two bits.

In this method, the pixels in the block can be rotated by a change in the rotation code.

In the following there will be explained processes conducted to achieve affine conversion, i.e., enlargement, reduction, displacement or rotation of an image.

Among the address $(x_S, y_S)$ of an input image on the input memory; an image magnification $\alpha$ in the main scanning direction; an image magnification $\beta$ in the sub scanning direction; an angle of rotation $\phi$; coordinate $(x_C, y_C)$ of the center of rotation; an amount of displacement $x_m$ in the main scanning direction; an amount of displacement $y_m$ in the sub scanning direction; and an address $(x_D, y_D)$ in the output memory, there stands a following relationship:

$$\begin{pmatrix} x_D \\ y_D \end{pmatrix} = \begin{pmatrix} \alpha & 0 \\ 0 & \beta \end{pmatrix} \begin{pmatrix} \cos\phi & -\sin\phi \\ \sin\phi & \cos\phi \end{pmatrix} \begin{pmatrix} x_s - x_c \\ y_s - y_c \end{pmatrix} + \begin{pmatrix} x_c \\ y_c \end{pmatrix} + \begin{pmatrix} x_m \\ y_m \end{pmatrix} \qquad (1)$$

The affine conversion is conducted by entering raster source data from the file, reader or image memory, and storing said data in random access in a destination memory, for which the image memory is utlised. Thus the affine conversion can be achieved at a very high speed, by means of the pipeline converter 4, in the course of data transfer from the file to the image memory, in successive manner. The image data are in the aforementioned compressed form, and the address is defined in an address space corresponding to the compressed data.

After the determination of the addresses of the encoded data after the affine conversion, there is conducted permutation of the image data in the block, as will be explained in the following for a case of a 2 x 2 block.

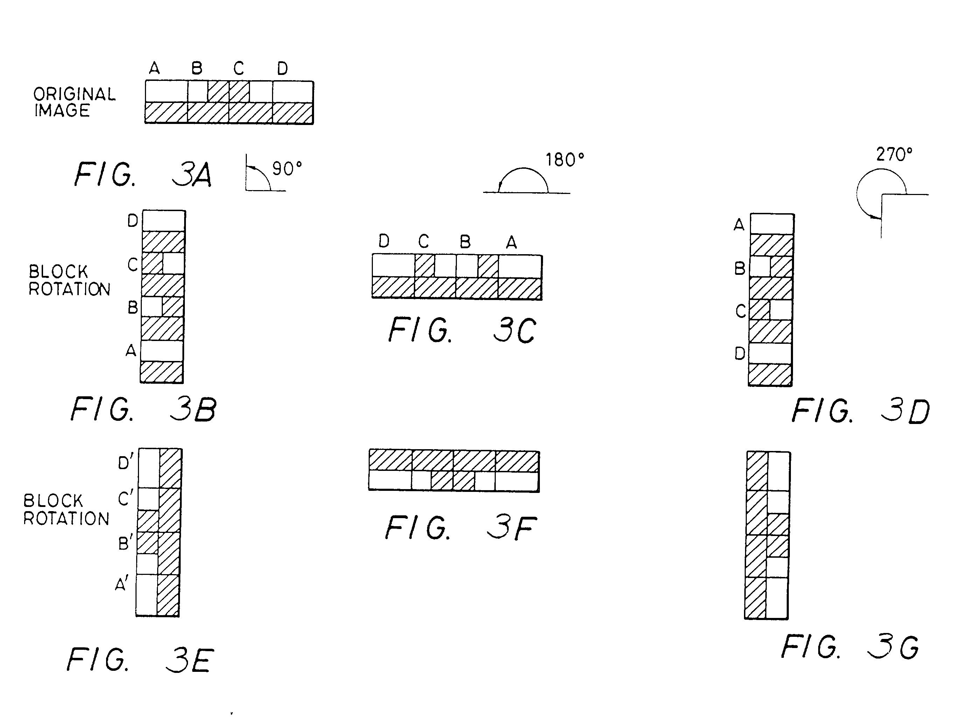

Fig. 3A shows data of 4 blocks A, B, C, D constituting an original image. If addresses are generated and stored in the destination memory by the above-explained rotation process for a block rotation of 90°, 180° or 270°, the resulting image does not faithfully reproduce the original image, as shown in Figs. 3B, 3C or 3D. Consequently the pixels in each block are rotated according to the angle of rotation to achieve faithful reproduction as shown in Fig. 3E, 3F or 3G, respectively representing a rotation of the pixels of each block by 90°, 180° or 270°. Said rotation can be achieved by varying the rotation code of 2 bits shown in Fig. 2B, without modifying the pattern codes.

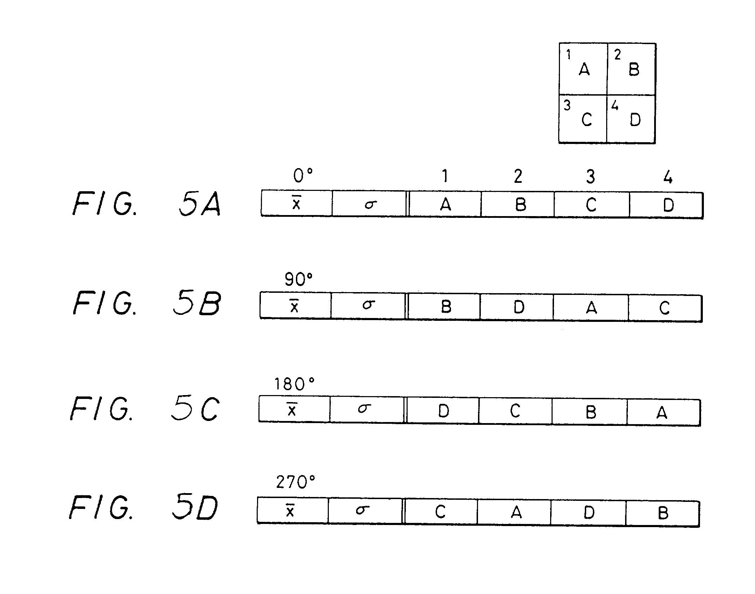

For a rotation of an arbitrary angle, the rotation in block is selected respectively in four ranges of image rotation of 90° each. As shown in Fig. 4, the angle of image rotation is divided into four ranges of 315° - 45°, 45° - 135°, 135° - 225° and 225° - 315°, and a rotation in the block of 0°, 90°, 180° or 270°, is respectively selected.

Figs. 5A to 5D show examples in the block encoding format shown in Fig 3A, of reformatting by rearrangement by rotation in the block, respectively corresponding to a rotation of 0°, 90°, 180° or 270°. The data $\bar{x}$ and $\sigma$ are not changed, and the succeeding density data are permutated. The original data sequence ABCD shown in Fig. 5A, corresponding to a rotation of 0°, is changed to BDAC as shown in Fig. 5B corresponding to a rotation of 90°, or DCBA as shown in Fig. 5C for 180°, or CABD as shown in Fig. 5D for 270°.

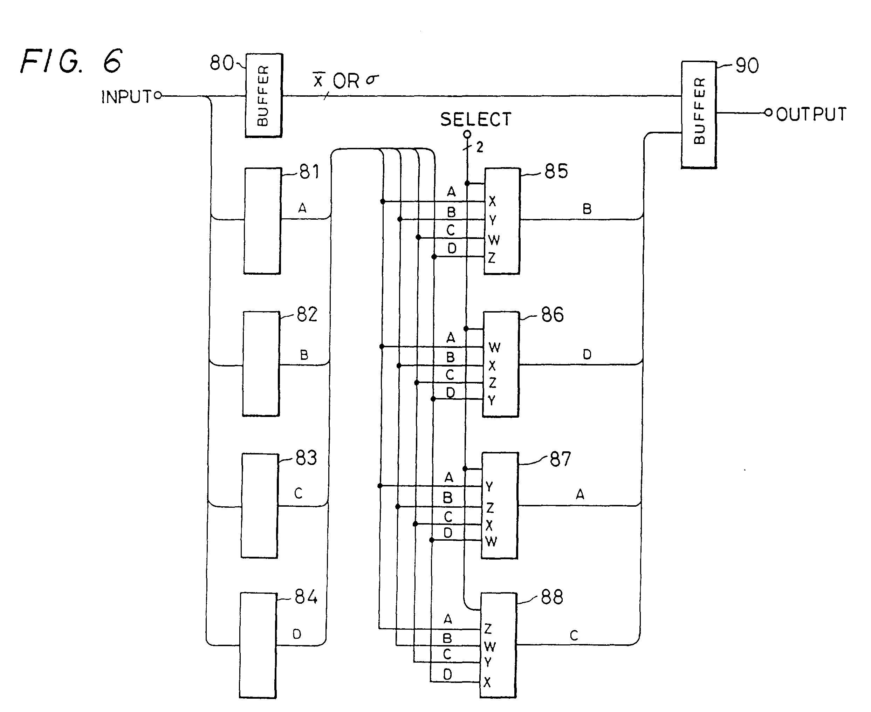

Fig.6 shows an embodiment of a circuit for converting the data format in the block, wherein the input signals $\bar{x}$, $\sigma$ are stored in a buffer 80, and the succeeding density data are separately stored in buffers 81, 82, 83, 84. Selectors 85, 86, 87, 88 receive select signals corresponding to the angle of rotation, from an unrepresented controller. For example there is employed a select signal of 2 bits, in which 0, 1, 2 and 3 respectively corresponding to an angle of 0°, 90°, 180° or 270°. Output lines A, B, C, D of said buffers 81, 82, 83, 84 are connected to input lines X, Y, Z, W of the selectors 85, 86, 87, 88 in different permutations. As an example, in response to the select signal "1", each selector releases a signal received at the input terminal Y, whereby signals B, D, A and C are respectively obtained form the selectors 85, 86, 87 and 88. These output signals are combined with $\bar{x}$ and o in a buffer 90 to obtain an output data format as shown in Fig. 5.

In the foregoing embodiment of block rotation and in-block rotation of the encoded data, the affine conversion is achieved by a combination of a collective rotation of compressed data of an m x m block, and a rotation of compressed data in said m x m block. In order to minimize the deterioration in image quality associated in such operations,

(1) the luminance signal Y is subjected to block encoding or vector quantization in a small matrix $m_0 \times m_0$; and

(2) colour difference signal I, Q, only requiring a relatively low resolving power for human eyes, are subjected to block encoding in a relatively large matrix $m_1 \times m_1$ ($m_1 > m_0$), or vector quantization, or direct averaging.

## Claims

1. An image processing apparatus for performing an affine transformation of image data representing an array of pixels defining a colour image, the image data comprising a plurality of colour signal components (Y,I,Q) each comprising respective colour signal data in respect of each of the pixels and the colour signal components collectively defining the intensity and colour of the array of pixels, wherein the apparatus comprises:

memory means (3,5) for storing the colour image data as a plurality of arrays of data blocks such that a respective array of data blocks is provided for each of said colour signal components and each data block represents colour signal data for a corresponding block of pixels, wherein the location of each data block in its respective array of data blocks depends upon the position of the corresponding block of pixels in the array of pixels, and wherein each data block is stored in said memory means in a compressed form in accordance with a predetermined image encoding format which, with regard to at least one array of data blocks, compresses the colour signal data for each data block while substantially preserving the resolution of the colour signal data which it contains; and
processing means (4) for performing the affine transformation of the image data by:

(i) a first process in which the data blocks stored in said memory means are shifted in the respective arrays of data blocks so as to change the positions of the corresponding block of pixels in the colour image in accordance with said affine transformation, and
(ii) a second process in which the colour signal data within each data block of said at least one array of data blocks is modified while the data blocks remain in said compressed form so as to change the positions of pixels within the corresponding blocks of pixels in accordance with said affine transformation.

2. An apparatus according to claim 1, wherein the colour signal components comprise a luminance component and first and second chrominance components, and wherein said at least one array of data blocks is constituted by colour signal data of the luminance component.

3. An apparatus according to claim 2, wherein each of the data blocks representing said first and second chrominance components comprises an average value of the corresponding colour signal data for the corresponding block of pixels.

4. An apparatus according to claim 2 or 3, wherein each of the data blocks representing said luminance component represents a block of $m_0 \times m_0$ pixels and each of the data blocks representing said first and second chrominance components represents a block of $m_1 \times m_1$ pixels and wherein $m_1$ is greater than $m_0$.

5. An apparatus according to any preceding claim, wherein each data block of said at least one array of data blocks comprises an average value of the corresponding colour signal data for the corresponding block of pixels and, for each pixel in the corresponding block of pixels, a quantised code indicative of the colour signal data of that pixel relative to said average value, and wherein the second process modifies said codes within the compressed data block.

6. An apparatus according to claim 5, wherein each data block of said at least one array of data blocks further comprises a standard deviation of the corresponding colour signal data for the corresponding block of pixels, and wherein said quantised codes indicative of the colour signal data relative to said average value are normalised in units of said standard deviation.

7. An apparatus according to any of claims 1 to 4, wherein each of the data blocks of said at least one array of data blocks comprises an average value of the corresponding signal data for the corresponding block of pixels and an angle of rotation of a pattern representing the corresponding block of pixels, and wherein the second process operates by modifying said angle of rotation.

8. An apparatus according to any preceding claim, further comprising display means (10) for displaying an image in accordance with the processed image data stored in said memory means.

9. An apparatus according to any preceding claim, wherein said affine transformation comprises rotation of the image.

10. An apparatus according to claim 9, comprising selection means (85, 86, 87, 88) for variably selecting degrees of rotation in accordance with the selection signal, and wherein said processing means (4) is operable to perform said first and second processes according to the selected degree of rotation.

11. A method of performing an affine transformation of image data representing an array of pixels defining a colour image, the image data comprising a plurality of colour signal components (Y,I,Q) each comprising respective colour signal data in respect of each of the pixels and the colour signal components collectively defining the intensity and colour of the array of pixels, wherein the method comprises the steps of:

storing the colour image data as a plurality of arrays of data blocks such that a respective array of data blocks is provided for each of said colour signal components and each data block represents colour signal data for a corresponding block of pixels, wherein the location of each data block in its respective array of data blocks depends upon the position of the corresponding block of pixels in the array of pixels, and wherein each data block is stored in a compressed form in accordance with a predetermined image encoding format which, with regard to at least one array of data blocks, compresses the colour signal data for each data block while substantially preserving the resolution of the colour signal data which it contains; and
performing the affine transformation of the image data by:

(i) shifting the stored data blocks in the respective arrays of data blocks so as to change the positions of the corresponding block of pixels in the colour image in accordance with said affine transformation, and
(ii) modifying the colour signal data within each data block of said at least one array of data blocks while the data blocks remain in said compressed form so as to change the positions of pixels within the corresponding blocks of pixels in accordance with said affine transformation.

**12.** A method according to claim 11, wherein the colour signal components comprise a luminance component and first and second chrominance components, and wherein said at least one array of data blocks is constituted by colour signal data of the luminance component.

**13.** A method according to claim 12, wherein each of the data blocks representing said first and second chrominance components comprises an average value of the corresponding colour signal data for the corresponding block of pixels.

**14.** A method according to claim 12 or 13, wherein each of the data blocks representing said luminance component represents a block of $m_0$ x $m_0$ pixels and each of the data blocks representing said first and second chrominance components represents a block of $m_1$ x $m_1$ pixels and wherein $m_1$ is greater than $m_0$.

**15.** A method according to any of claims 11 to 14, wherein each data block of said at least one array of data blocks comprises an average value of the corresponding colour signal data for the corresponding block of pixels and, for each pixel in the corresponding block of pixels, a quantised code indicative of the colour signal data of that pixel relative to said average value, and wherein said modifying step modifies said codes within the compressed data block.

**16.** A method according to claim 15, wherein each data block of said at least one array of data blocks further comprises a standard deviation of the corresponding colour signal data for the corresponding block of pixels, and wherein said quantised codes indicative of the colour signal data relative to said average value are normalised in units of said standard deviation.

**17.** A method according to any of claims 11 to 14, wherein each of the data blocks of said at least one array of data blocks comprises an average value of the corresponding signal data for the corresponding block of pixels and an angle of rotation of a pattern representing the corresponding block of pixels, and wherein said modifying step modifies said angle of rotation.

**18.** A method according to any of claims 11 to 17, further comprising the step of displaying an image in accordance with the processed image data.

**19.** A method according to any of claims 11 to 18, wherein said affine transformation comprises rotation of the image.

**20.** A method according to claim 19, comprising the step of variably selecting degrees of rotation in accordance with a selection signal, and wherein said performing step performs said shifting and modifying steps according to the selected degree of rotation.

**Patentansprüche**

**1.** Bildverarbeitungsgerät zur Durchführung einer affinen Transformation von Bilddaten, die eine ein Farbbild definierende regelmäßige Bildelementanordnung darstellen, wobei die Bilddaten eine Vielzahl von Farbsignalkomponenten (Y, I, Q) aufweisen, die jeweils jeweilige Farbsignaldaten in bezug auf jedes der Bildelemente und der Farbsignalkomponenten aufweisen, die zusammen die Intensität und die Farbe der regelmäßigen Bildelementanordnung definieren, mit

einer Speichereinrichtung (3, 5) zum Speichern der Farbbilddaten als eine Vielzahl regelmäßiger Datenblockanordnungen derart, daß eine jeweilige regelmäßige Datenblockanordnung für jede Farbsignalkomponente vorgesehen wird und daß jeder Datenblock Farbsignaldaten für einen entsprechenden Bildelementolock darstellt, wobei die Stelle jedes Datenblocks in dessen jeweiliger regelmäßiger Datenblockanordnung von der Position des entsprechenden Bildelementblocks in der regelmäßigen Bildelementanordnung abhängt, und wobei jeder Datenblock in der Speichereinrichtung in komprimierten Form in Übereinstimmung mit einem vorbestimmten Bildkodierformat gespeichert wird, das in bezug auf zumindest eine regelmäßige Datenblockanordnung die Farbsignaldaten für jeden Datenblock komprimiert, während im wesentlichen die Auflösung der Farbsignaldaten erhalten wird, die es beinhaltet, und einer Verarbeitungseinrichtung zur Durchführung der affinen Transformation der Bilddaten durch

(i) eine erste Verarbeitung, bei der die in der Speichereinrichtung gespeicherten Datenblöcke in den jeweiligen regelmäßigen Datenblockanordnungen derart verschoben werden, daß die Positionen des entsprechenden Bildelementblocks in dem Farbbild in Übereinstimmung mit der affinen Transformation verändert werden, und

(ii) eine zweite Verarbeitung, bei der die Farbsignaldaten innerhalb jedes Datenblocks der zumindest einen regelmäßigen Datenblockanordnung modifiziert werden, während die Datenblöcke in der komprimierten Form verbleiben, damit die Positionen der Bildelemente innerhalb der entsprechenden Bildelementblöcke in Übereinstimmung mit der affinen Transformation verändert werden.

2. Gerät nach Anspruch 1, wobei die Farbbildsignalkomponezten eine Luminanzkomponente sowie erste und zweite Chrominnanzkomponenten aufweisen, und wobei zumindest eine regelmäßige Datenblockanordnung aus Farbsignaldaten der Luminanzkomponente besteht.

3. Gerät nach Anspruch 2, wobei jeder Datenblock, der die ersten und zweiten Chrominanzkomponenten darstellt, einen Durchschnittswert der entsprechenden Farbsignaldaten für den entsprechenden Bildelementblock aufweist.

4. Gerät nach Anspruch 2 oder 3, wobei jeder die Luminanzkomponente darstellende Datenblock einen Block von $m_0 \times m_0$ Bildelemente darstellt und jeder die ersten und zweiten Chrominanzkomponenten darstellende Datenblock einen Block von $m_1 \times m_1$ Bildelementen darstellt, und wobei $m_1$ größer als $m_0$ ist.

5. Gerät nach einem der vorangehenden Ansprüche, wobei jeder Datenblock der zumindest einen regelmäßigen Datenblockanordnung einen Durchschnittswert der entsprechenden Farbsignaldaten für den entsprechenden Bildelementblock sowie für jedes Bildelement in dem entsprechenden Bildelementblock einen quantisierten Code aufweist, der die Farbsignaldaten des Bildelements relativ zu dem Durchschnittswert angibt, und wobei die zweite Verarbeitung die Codes innerhalb des komprimierten Datenblocks modifiziert.

6. Gerät nach Anspruch 5, wobei jeder Datenblock der zumindest einen regelmäßigen Datenblockanordnung weiterhin eine Standardabweichung der entsprechenden Farbsignaldaten für den entsprechenden Bildelementblock aufweist, und wobei die quantisierten Codes, die die Farbsignaldaten relativ zu dem Durchschnittswert angeben, in Einheiten der Standardabweichung normalisiert sind.

7. Gerät nach einem der Ansprüche 1 bis 4, wobei jeder Datenblock der zumindest einen Datenblockanordnung einen Durchschnittswert der entsprechenden Signaldaten für den entsprechenden Bildelementblock sowie einen Rotationswinkel eines den entsprechenden Datenblock darstellenden Musters aufweist, und wobei die zweite Verarbeitung durch Modifizierung des Rotationswinkels arbeitet.

8. Gerät nach einem der vorangehenden Ansprüche mit einer Anzeigeeinrichtung (10) zur Anzeige eines Bildes entsprechend der in Speichereinrichtung gespeicherten verar-beiteten Bilddaten.

9. Gerät nach einem der vorangehenden Ansprüche, wobei die affine Transformation die Rotation des Bildes aufweist.

10. Gerät nach Anspruch 9 mit einer Auswahleinrichtung (85, 86, 87, 88) zur variablen Auswahl von Rotationsgraden in Übereinstimmung mit dem Auswahlsignal, wobei die Verarbeitungseinrichtung (4) zur Durchführung der ersten und zweiten Verarbeitungen entsprechend dem ausgewählten Roationsgrad betreibbar ist.

11. Verfahren zur Durchführung einer affinen Transformation von Bilddaten, die eine ein Farbbild definierende regelmäßige Bildelementanordnung darstellen, wobei die Bilddaten eine Vielzahl von Farbsignalkomponenten (Y, I, Q) aufweisen, die jeweils jeweilige Farbsignaldaten in bezug auf jedes der Bildelemente und der Farbsignalkomponenten aufweisen, die zusammen die Intensität und die Farbe der regeßmäßigen Bildelementanordnung definieren, mit den Schritten

Speichern der Farbbilddaten als eine Vielzahl regelmäßiger Datenblockanordnungen derart, daß eine jeweilige regelmaßige Datenblockanordnung für jede Farbsignalkomponente vorgesehen wird und daß jeder Datenblock Farbsignaldaten für einen entsprechenden Bildelementblock darstellt, wobei die Stelle jedes Datenblocks in dessen jeweiliger regelmäßiger Datenblockanordnung von der Position des entsprechenden Bildelementblocks in der regelmäßigen Bildelementanordnung abhängt, und wobei jeder Datenblock in der Speichereinrichtung in komprimierter Form in Übereinstimmung mit einem vorbestimmten Bildkodierformat gespeichert wird, das in bezug auf zumindest eine regelmäßige Datenblockanordnung die Farbsignaldaten für jeden Datenblock komprimiert, während im wesentlichen die Auflösung der Farbsignaldaten erhalten wird, die es beinhaltet, und

Durchführen der affinen Transformation der Bilddaten durch

(i) Verschieben der in der Speichereinrichtung gespeicherten Datenblöcke in den jeweiligen regelmäßigen Datenblockanordnungen derart, daß die Positionen des entsprechenden Bildelementblocks in dem Farbbild in Übereinstimmung mit der affinen Transformation verändert werden, und

(ii) Modifizieren der Farbsignaldaten innerhalb jedes Datenblocks der zumindest einen regelmäßigen Datenblockanordnung, während die Datenblöcke in der komprimierten Form verbleiben, damit die Positionen der Bildelemente innerhalb der entsprechenden Bildelementblöcke in Übereinstimmung mit der affinen Transformation verändert werden.

12. Verfahren nach Anspruch 11, wobei die Farbbildsignalkomponenten eine Luminanzkomponente sowie erste und zweite Chrominanzkomponenten aufweisen, und wobei zumindest eine regelmäßige Datenblockanordnung aus Farbsignaldaten der Luminanzkomponente besteht.

13. Verfahren nach Anspruch 12, wobei jeder Datenblock, der die ersten und zweiten Chrominanzkomponenten darstellt, einen Durchschnittswert der entsprechenden Farbsignaldaten für den entsprechenden Bildelementblock aufweist.

14. Verfahren nach Anspruch 12 oder 13, wobei jeder die Luminanzkomponente darstellende Datenblock einen Block von $m_0$ x $m_0$ Bildelemente darstellt und jeder die ersten und zweiten Chrominanzkomponenten darstellende Datenblock einen Block von $m_1$ x $m_1$ Bildelementen darstellt, und wobei $m_1$ größer als $m_0$ ist.

15. Verfahren nach einem der Ansprüche 11 bis 14, wobei jeder Datenblock der zumindest einen regelmäßigen Datenblockanordnung einen Durchschnittswert der entsprechenden Farbsignaldaten für den entsprechenden Bildelementblock sowie für jedes Bildelement in dem entsprechenden Bildelementblock einen quantisierten Code aufweist, der die Farbsignaldaten des Bildelements relativ zu dem Durchschnittswert angibt, und wobei bei dem Modifizierungsschritt die Codes innerhalb des komprimierten Datenblocks modifiziert werden.

16. Verfahren nach Anspruch 15, wobei jeder Datenblock der zumindest einen regelmäßigen Datenblockanordnung weiterhin eine Standardabweichung der entsprechenden Farbsignaldaten für den entsprechenden Bildelementblock aufweist, und wobei die quantisierten Codes, die die Farbsignaldaten relativ zu dem Durchschnittswert angeben, in Einheiten der Standardabweichung normalisiert sind.

17. Verfahren nach einem der Ansprüche 11 bis 14, wobei jeder Datenblock der zumindest einen Datenblockanordnung einen Durchschnittswert der entsprechenden Signaldaten für den entsprechenden Bildelementblock sowie einen Rotationswinkel eines den entsprechenden Datenblock darstellenden Musters aufweist, und wobei bei dem Modifizierungsschritt der Rotationswinkel modifiziert wird.

18. Verfahren nach einem der Ansprüche 11 bis 17 mit dem Schritt Anzeigen eines Bildes entsprechend den verarbeiteten Bilddaten.

19. Verfahren nach einem der Ansprüche 11 bis 18, wobei die affine Transformation die Rotation des Bildes aufweist.

20. Verfahren nach Anspruch 19 mit dem Schritt variables Auswählen von Rotationsgraden in Übereinstimmung mit einem Auswahlsignal, wobei bei dem Durchführungsschritt die Verschiebe- und Modofizierungsschritte entsprechend dem ausgewählten Roationsgrad ausgeführt werden.

## Revendications

1. Appareil de traitement d'images destiné à réaliser une transformation affine de données d'images représentant un groupement de pixels définissant une image en couleurs, les données d'images comprenant une pluralité de composantes de signaux de couleurs (Y, I, Q) comprenant chacun des données de signal de couleur respectives par rapport à chacun des pixels et les composantes de signaux de couleurs définissant ensemble l'intensité et la couleur du groupement de pixels, l'appareil comportant :

des moyens à mémoire (3, 5) destinés à stocker les données d'images en couleur sous la forme d'une pluralité de groupements de blocs de données tels qu'un groupement respectif de blocs de données est prévu pour chacune desdites composantes de signal de couleur et chaque bloc de données représente une donnée de signal de couleur pour un bloc correspondant de pixels, dans lequel l'emplacement de chaque bloc de données dans son groupement respectif de blocs de données dépend de la position du bloc correspondant de pixels dans le groupement de pixels, et dans lequel chaque bloc de données est stocké dans lesdits moyens à mémoire sous une forme compressée conformément à un format de codage d'image prédéterminé qui, en ce qui concerne au moins un groupement de blocs de données, compresse les données de signaux de couleur pour chaque bloc de données tout en préservant sensiblement la résolution des données de signaux de couleur qu'il contient ; et

des moyens de traitement (4) destinés à effectuer la transformation affine des données d'images par :

(i) un premier processus dans lequel les blocs de données stockés dans lesdits moyens à mémoire sont décalés dans les groupements respectifs de blocs de données afin de modifier les positions du bloc correspondant de pixels dans l'image en couleurs en conformité avec ladite transformation affine ; et

(ii) un second processus dans lequel les données de signaux de couleur à l'intérieur de chaque bloc de données dudit, au moins un, groupement de blocs de données sont modifiées tandis que les blocs de données restent sous ladite forme compressée afin de modifier les positions de pixels à l'intérieur des blocs correspondants de pixels en conformité avec ladite transformation affine.

2. Appareil selon la revendication 1, dans lequel les composantes de signaux de couleurs comprennent une composante de luminance et des première et seconde composantes de chrominance, et dans lequel ledit, au moins un, groupement de blocs de données est constitué par des données de signaux de couleur de la composante de luminance.

3. Appareil selon la revendication 2, dans lequel chacun des blocs de données représentant lesdites première et seconde composantes de chrominance comprend une valeur moyenne de la donnée de signal de couleur correspondante pour le bloc correspondant de pixels.

4. Appareil selon la revendication 2 ou 3, dans lequel chacun des blocs de données représentant ladite composante de luminance représente un bloc de $m_0$ x $m_0$ pixels et chacun des blocs de données représentant lesdites première et seconde composantes de chrominance représente un bloc de $m_1$ x $m_1$ pixels et où $m_1$ est supérieur à $m_0$.

5. Appareil selon l'une quelconque des revendications précédentes, dans lequel chaque bloc de données dudit, au moins un, groupement de blocs de données comprend une valeur moyenne des données de signaux de couleur correspondantes pour le bloc correspondant de pixels et, pour chaque pixel dans le bloc correspondant de pixels, un code quantifié représentatif de la donnée de signal de couleur de ce pixel par rapport à ladite valeur moyenne, et dans lequel le second processus modifie lesdits codes à l'intérieur du bloc de données compressé.

6. Appareil selon la revendication 5, dans lequel chaque bloc de données dudit, au moins un, groupement de blocs de données comprend en outre un écart type de la donnée correspondante de signal de couleur pour le bloc correspondant de pixels, et dans lequel lesdits codes quantifiés représentatifs des données de signaux de couleur par rapport à ladite valeur moyenne sont normalisés en unités dudit écart type.

7. Appareil selon l'une quelconque des revendications 1 à 4, dans lequel chacun des blocs de données dudit, au moins un, groupement de blocs de données comprend une valeur moyenne de la donnée de signal correspondante pour le bloc correspondant de pixels et un angle de rotation d'un motif représentant le bloc correspondant de pixels, et dans lequel le second processus agit en modifiant ledit angle de rotation.

8. Appareil selon l'une quelconque des revendications précédentes, comportant en outre un moyen d'affichage (10) destiné à afficher une image en conformité avec les données d'image traitées stockées dans lesdits moyens à mémoire.

9. Appareil selon l'une quelconque des revendications précédentes, dans lequel ladite transformation affine comprend une rotation de l'image.

10. Appareil selon la revendication 9, comportant des moyens de sélection (85, 86, 87, 88) destinés à sélectionner de façon variable des degrés de rotation en fonction du signal de sélection, et dans lequel lesdits moyens de traitement (4) peuvent agir de façon à effectuer lesdits premier et second processus en conformité avec le degré sélectionné de rotation.

11. Procédé pour effectuer une transformation affine de données d'image représentant un groupement de pixels définissant une image en couleurs, les données d'image comprenant une pluralité de composantes de signaux de couleurs (Y, I, Q) comprenant chacune une donnée de signal de couleur respective vis-à-vis de chacun des pixels et les composantes de signaux de couleurs définissant ensemble l'intensité et la couleur du groupement de pixels, le procédé comprenant les étapes dans lesquelles :

on stocke les données d'images en couleurs sous forme de plusieurs groupements de blocs de données de manière qu'un groupement respectif de blocs de données soit prévu pour chacune desdites composantes de signaux de couleurs et que chaque bloc de données représente des données de signaux de couleur pour un bloc correspondant de pixels, dans lequel l'emplacement de chaque bloc de données dans son groupement respectif des blocs de données dépend de la position du bloc correspondant de pixels dans le groupement de pixels et dans lequel chaque bloc de données est stocké sous une forme compressée conformément à un format prédéterminé de codage d'image qui, vis-à-vis d'au moins un groupement de blocs de données, compresse les données de signaux de couleur pour chaque bloc de données tout en préservant sensiblement la résolution des données de signaux de couleur qu'il contient et
on exécute la transformation affine des données d'image en :

(i) décalant les blocs de données stockés dans les groupements respectifs de blocs de données afin de modifier les positions du bloc correspondant de pixels dans l'image en couleur conformément à ladite transformation affine, et
(ii) modifiant les données de signaux de couleur dans chaque bloc de données dudit, au moins un, groupement de blocs de données tandis que les blocs de données restent dans ladite forme compressée afin de modifier les positions de pixels à l'intérieur des blocs correspondants de pixels conformément à ladite transformation affine.

12. Procédé selon la revendication 11, dans lequel les composantes de signaux de couleur comprennent une composante de luminance et des première et seconde composantes de chrominance, et dans lequel ledit, au moins un, groupement de blocs de données est constitué par des données de signaux de couleur de la composante de luminance.

13. Procédé selon la revendication 12, dans lequel chacun des blocs de données représentant lesdites première et seconde composantes de chrominance comprend une valeur moyenne des données correspondantes de signaux de couleur pour le bloc correspondant de pixels.

14. Procédé selon la revendication 12 ou 13, dans lequel chacun des blocs de données représentant ladite composante de luminance représente un bloc de $m_0$ x $m_0$ pixels et chacun des blocs de données représentant lesdites première et seconde composantes de chrominance représente un bloc de $m_1$ x $m_1$ pixels, et où $m_1$ est supérieur à $m_0$.

15. Procédé selon l'une quelconque des revendications 11 à 14, dans lequel chaque bloc de données dudit, au moins un, groupement de blocs de données comprend une valeur moyenne des données correspondantes de signaux de couleur pour le bloc correspondant de pixels et, pour chaque pixel dans le bloc correspondant de pixels, un code quantifié représentatif des données de signaux de couleur de ce pixel par rapport à ladite valeur moyenne, et dans lequel ladite étape de modification modifie lesdits codes à l'intérieur du bloc de données compressé.

16. Procédé selon la revendication 15, dans lequel chaque bloc de données dudit, au moins un, groupement de blocs de données comprend en outre un écart type des données correspondantes de signaux de couleur pour le bloc correspondant de pixels, et dans lequel lesdits codes quantifiés représentatifs des données de signaux de couleur par rapport à ladite valeur moyenne sont normalisés en unités dudit écart type.

17. Procédé selon l'une quelconque des revendications 11 à 14, dans lequel chacun des blocs de données dudit, au moins un, groupement de blocs de données comprend une valeur moyenne des données de signaux correspondantes pour le bloc correspondant de pixels et un angle de rotation d'un motif représentant le bloc correspondant de pixels, et dans lequel ladite étape de modification modifie ledit angle de rotation.

18. Procédé selon l'une quelconque des revendications 11 à 17, comprenant en outre une étape d'affichage d'une image en conformité avec les données d'images traitées.

**19.** Procédé selon l'une quelconque des revendications 11 à 18, dans lequel ladite transformation affine comprend une rotation de l'image.

**20.** Procédé selon la revendication 19, comprenant l'étape consistant à sélectionner de façon variable les degrés de rotation en fonction d'un signal de sélection, et dans lequel ladite étape d'exécution exécute lesdites étapes de décalage et de modification en fonction du degré sélectionné de rotation.

# FIG. 1

*F I G.  2A*

$m \times m$

| $\bar{x}$ | $\sigma$ | DENSITY DATA | | | |
|---|---|---|---|---|---|

1          2      - - - - -      $m \times m$

*F I G.  2B*

| $\bar{x}$ | $\sigma$ | ROTATION CODE | PATTERN CODE |
|---|---|---|---|

*F I G.  4*

A B C D

ORIGINAL IMAGE

*FIG. 3A*

90°

180°

D C B A

*FIG. 3C*

270°

A
B
C
D

*FIG. 3D*

D C B A

BLOCK ROTATION

*FIG. 3B*

*FIG. 3F*

*FIG. 3G*

D' C' B' A'

BLOCK ROTATION

*FIG. 3E*

15

EP 0 235 456 B1

| 1 A | 2 B |
|---|---|
| 3 C | 4 D |

FIG. 5A

0°  1  2  3  4

| $\bar{x}$ | $\sigma$ | A | B | C | D |

FIG. 5B

90°

| $\bar{x}$ | $\sigma$ | B | D | A | C |

FIG. 5C

180°

| $\bar{x}$ | $\sigma$ | D | C | B | A |

FIG. 5D

270°

| $\bar{x}$ | $\sigma$ | C | A | D | B |

FIG. 6

EP 0 235 456 B1